Europäisches Patentamt

European Patent Office

Office européen des brevets

(11) Veröffentlichungsnummer: **0 210 382**
**A1**

## EUROPÄISCHE PATENTANMELDUNG

(21) Anmeldenummer: 86107674.3

(51) Int. Cl.⁴: **C05F 9/02**

(22) Anmeldetag: 05.06.86

(30) Priorität: 03.07.85 DE 8519323 U
03.07.85 DE 8519324 U
03.07.85 DE 8519325 U
03.07.85 DE 8519326 U

(43) Veröffentlichungstag der Anmeldung:
**04.02.87 Patentblatt 87/06**

(84) Benannte Vertragsstaaten:
AT BE CH DE FR GB IT LI

(71) Anmelder: Lescha Maschinenfabrik GmbH
Ulmer Strasse 249-251
D-8900 Augsburg(DE)

(72) Erfinder: Schmid, Dieter
Ulmer Strasse 249/251
D-8900 Augsburg(DE)

(74) Vertreter: Munk, Ludwig, Dipl.-Ing.
Patentanwalt Prinzregentenstrasse 1
D-8900 Augsburg(DE)

(54) Vorrichtung zur Kompostierung organischer Abfälle.

(57) Bei einer Vorrichtung zur Kompostierung organischer Abfälle mit einer um ihre Längsachse drehbaren Trommel (1), die mit stirnseitig angeordneten Wellenstummeln (2) auf seitlichen Stützböcken (3) gelagert und mittels mindestens einer im Bereich einer stirnseitig angeordneten Antriebseinrichtung bewegbar ist, lassen sich dadurch eine einfache Herstellbarkeit sowie kompakte Lagerungs-und Transportmöglichkeiten erreichen, daß die Trommel (1) einen Vieleckquerschnitt aufweist und daß die trommelseitigen Elemente (21 bzw. 23) der Antriebseinrichtung außerhalb des Trommelumfangs angeordnet sind.

FIG 1

## Vorrichtung zur Kompostierung organischer Abfälle

Die Erfindung betrifft eine Vorrichtung zur Kompostierung organischer Abfälle mit einer um ihre Längsachse drehbaren Trommel, die mit stirnseitig angeordneten Wellenstummeln auf seitlichen Stützböcken gelagert und mittels mindestens einer im Bereich einer Stirnseite angeordneten Antriebseinrichtung bewegbar ist.

Eine Anordnung dieser Art ist aus der DE-U 84 31 486 bekannt. Bei dieser bekannten Anordnung besteht die Antriebseinrichtung aus einem auf einem Stützbock gelagerten Zahnrad, das mit einer im Bereich des stirn seitigen Rands des Trommelmantels vorgesehenen Verzahnung im Eingriff ist. Die Trommel muß hierbei dementsprechend einen kreisförmigen Querschnitt aufweisen. Die Herstellung einer Trommel mit kreisförmigem Querschnitt erfordert jedoch einen sehr hohen Aufwand. In diesem Zusammenhang ist zunächst davon auszugehen, daß hierbei das den Trommelmantel bildende Blech entsprechend dem kreisförmigen Trommelquerschnitt gebogen werden muß, was komplizierte Werkzeuge und einen hohen Zeiteinsatz erfordert. Außerdem müssen hierbei die die Trommelstirnseiten verschließenden Stirnwandungen kreisförmige Konfiguration aufweisen und können daher nicht ohne größeren Verschnitt hergestellt werden. Hinzu kommt, daß die Lagerung der Trommel zur Gewährleistung eines exakten Zahneingriffs zwischen dem Antriebsrad und der im Bereich des stirnseitigen Rands des kreisrunden Trommelmantels vorgesehenen Verzahnung ebenfalls einen hohen Aufwand erfordert. Ferner kommt hinzu, daß sich aufgrund des kreisförmigen Trommelquerschnitts auch in demontiertem Zustand ein hoher Platzbedarf ergibt, was sich ungünstig auf die Lagerungs-und Transportkosten auswirkt. Ein weiterer Nachteil der bekannten Anordnung ist darin zu sehen, daß sich bei einer einen kreisförmigen Querschnitt aufweisenden Trommel nur ein sehr schlechter Mischeffekt erreichen läßt. Dementsprechend sind bei der bekannten Anordnung auch in die Trommel eingesetzte, vom Trommelmantel nach radial innen vorstehende Mischleisten vorgesehen, was den Herstellungsaufwand weiter erhöht.

Hiervon ausgehend ist es daher die Aufgabe der vorliegenden Erfindung, unter Vermeidung der Nachteile der bekannten Anordnungen eine Vorrichtung gattungsgemäßer Art zu schaffen, die mit vergleichsweise geringen Gestehungskosten herstellbar sowie in kompakter Form lager-und transportierbar ist, und die dennoch zuverlässig funktioniert.

Diese Aufgabe wird erfindungsgemäß dadurch gelöst, daß die Trommel einen Vieleckquerschnitt aufweist und daß die trommelseitigen Elemente der Antriebseinrichtung außerhalb des Trommelumfangs angeordnet sind.

Hierbei ergeben sich infolge des Vieleckquerschnitts der Trommel in vorteilhafter Weise aneinander anschließende, ebene Trommelumfangsabschnitte. Zur Bildung des Trommelmantels können daher in vorteilhafter Weise ebene bzw. lediglich abgekantete, einem derartigen Umfangsabschnitt zugeordnete Bleche, Verwendung finden. Diese sind daher nicht nur leicht und einfach herstellbar, sondern auch in kompakter Weise stapelbar, was sich positiv auf die Lager-und Transportkosten auswirkt. Die bei der erfindungsgemäßen Anordnung benötigten, den ebenen Umfangsabschnitten zugeordneten Mantelabschnitte und die ebenfalls gerade Kanten aufweisenden, vorzugsweise in zwei gleiche Hälften unterteilten Stirnwandungen sowie die vorzugsweise zerlegbaren Stützböcke lassen sich dabei zweckmäßig so verpacken, daß eine Palettengrundfläche durch eines oder mehrere nebeneinandergelegte Pakete voll genutzt werden kann. Da die Stirnwandungen ebenfalls gerade Kanten besitzen, können diese in vorteilhafter Weise verschnittarm bzw. verschnittfrei hergestellt werden. Infolge des Mehreckquerschnitts der Trommel ergibt sich aber auch ein sehr guter Mischeffekt, d. h. der Trommelinhalt wird beim Drehen der Trommel gut durchmischt. Auf zusätzliche Mischleisten kann daher in vorteilhafter Weise verzichtet werden, was sich ebenfalls positiv auf den erforderlichen Aufwand auswirkt. Da die Antriebseinrichtung in vorteilhafter Weise nicht in den Trommelumfang integriert ist, ist aber nicht nur ein mehreckiger Querschnitt der Trommel möglich, sondern kann in vorteilhafter Weise auch auf eine sehr einfache Trommellagerung zurückgegriffen werden, was sich ebenfalls vorteilhaft auf den erforderlichen Bauaufwand auswirkt. Die erfindungsgemäßen Maßnahmen führen somit ersichtlich zu einem äußerst niedrigen Gestehungspreis und ermöglichen daher auch einen vergleichsweise niedrigen Abgabepreis. Die mit der Erfindung erzielbaren Vorteile sind somit insbesondere in einer ausgezeichneten Wirtschaftlichkeit zu sehen.

Zweckmäßig kann der Trommelmantel aus aneinander angesetzten, jeweils einem ebenen Umfangsabschnitt zugeordneten Mantelabschnitten zusammengesetzt sein, die vorzugsweise im Bereich der Querschnittskanten einander überlappend angeordnet sein können. Durch die gegenseitige Überlappung ergibt sich in vorteilhafter Weise mit einfachen Mitteln ein sauberer Verschluß im Bereich der Querschnittskanten. Mit Vorteil können die Mantelabschnitte dabei jeweils eine abgewinkelte Randleiste aufweisen, welche den im Bereich der Querschnittskante endenden Rand des jeweils benachbarten Umfangsabschnitts übergreift. Diese Maßnahmen ergeben nicht nur eine einfache Montage, da die abgewinkelte Randleiste praktisch als Anschlagleiste dient, sondern ermöglichen in vorteilhafter Weise auch eine zuverlässige seitliche Abstützung der Mantelabschnitte auf ihrer ganzen Breite. Zur seitlichen Abstützung der Mantelabschnitte können die die Enden der Trommel verschließenden Stirnwände mit nach innen gekröpften Flanschen versehen sein, die durch einen einfachen Preßvorgang angeformt werden können.

Eine weitere zweckmäßige Ausbildung der übergeordneten Maßnahmen kann darin bestehen, daß die Stirnwände mit einer durch die Trommelachse gehenden Teilfuge versehen sind. Hierdurch ergeben sich in vorteilhafter Weise jeweils zwei gleiche Hälften, was die Herstellung vereinfachen und den Verschnitt reduzieren kann. Sofern die Trommel in bevorzugter Weise einen sechseckigen Querschnitt aufweist, erhalten die Stirnwandhälften die Form gleichmäßiger Trapeze, die sich praktisch verschnittfrei herstellen lassen. Ein weiterer Vorteil ist dabei darin zu sehen, daß die Höhe dieser gleichmäßigen Trapeze innerhalb des Bereichs der Breite der Mantelabschnitte liegt, was eine einfache Paketierung ermöglicht. Außerdem ergibt sich im Falle eines Sechseckquerschnitts auch eine verhältnismäßig gleichmäßige Masseverteilung bezüglich der Trommelachse.

Vorteilhaft können die Wellenstummel jeweils auf einem zugeordneten, auf die benachbarte Stirnwand aufgesetzten Flansch aufgenommen sein. Diese Flansche bilden dabei gleichzeitig eine Überbrückung der Stoßfuge zwischen den Stirnwandhälften, so daß sich auch bei Verwendung geteilter Stirnwände eine hohe Stabilität ergibt.

In weiterer zweckmäßiger Fortbildung der übergeordneten Maßnahmen ist im Bereich eines ebenen Umfangsabschnitts der Trommel eine durch die Längskante der benachbarten Mantelabschnitte unter- bzw. übergreifende Versteifungs - schienen begrenzte Öffnung vorgesehen, die durch eine schwenkbar gelagerte Klappe verschließbar ist. Die genannten Versteifungsschienen ergeben dabei in vorteilhafter Weise nicht nur einen verstärkten Öffnungsrand, sondern stellen in vorteilhafter Weise auch sicher, daß die an die Mantelöffnung sich anschließenden Mantelabschnitte im Bereich der Öffnung in derselben Weise abgestützt werden können, wie im Bereich einer Querschnittskante, an der sich zwei Mantelabschnitte überlappen. Sämtliche Mantelabschnitte können daher in vorteilhafter Weise dieselben Abmessungen aufweisen, was eine rationelle Herstellung ermöglicht.

Dadurch, daß bei der erfindungsgemäßen Vorrichtung der Trommelumfang nicht in die Antriebseinrichtung integriert ist, es es in vorteilhafter Weise auch möglich, eine höchst einfache und kostengünstige Art der Trommellagerung zu wählen. Vorteilhaft können daher die den Wellenstummeln zugeordneten Lager als auf den Stützböcken angeordnete, nach oben offene Stützlager ausgebildet sein. Hierbei ist es in vorteilhafter Weise möglich, die Trommel mit den Wellenstummeln einfach von oben in die zugeordneten Stützlager einzulegen, was eine einfache Aufstellung der erfindungsgemäßen Anordnung ermöglicht. Zur Bewirkung einer gegenseitigen axialen Sicherung können dabei in vorteilhafter Weise einfach an die Wellenstummel fest angeformte radiale Bunde vorgesehen sein.

Die vom Trommelumfang wegverlegte Antriebseinrichtung kann dabei einfach als Kettentrieb ausgebildet sein, der einen vorteilhaft an den äußeren Rand eines auf eine Stirnwand aufgeflanschten, eine Wellenstummel tragenden Flansches angeformten Kettenzahnkranz und ein durch eine Kette hiermit verbundenes, auf dem zugeordneten Stützbock gelagertes, mittels eines Betätigungselements antreibbares Kettenritzel aufweist. Der hier vorgesehene Kettentrieb kann infolge des Fehlens eines direkten Zahneingriffs zwischen Ritzel und trommelseitiger Verzahnung axiale Toleranzen ausgleichen, was sich in vorteilhafter Weise vorteilhaft auf den erforderlichen Lagerungsaufwand auswirkt. In einer anderen vorteilhaften Ausführung der Antriebseinrichtung kann diese aus an mindestens einer Stirnwand sternförmig befestigten, den Trommelmantel in radialer Richtung überragenden, vorzugsweise mit einem Handgriff versehenen Hebeln bestehen. Hierbei ergibt sich in vorteilhafter Weise nicht nur kein direkter Zahneingriff zwischen einem Antriebselement und einem trommelseitigen Gegenelement, sondern kommt in vorteilhafter Weise jede Art von Getriebe vollständig in Wegfall. Dennoch gewährleisten die radial vorstehenden Betätigungshebel eine sinnfällige und bedienungsfreundliche Betätigung.

Weitere zweckmäßige Ausgestaltungen und vorteilhafte Weiterbildungen der übergeordneten Maßnahmen ergeben sich aus der nachstehenden Beschreibung einiger Ausführungsbeispiele anhand der Zeichnung in Verbindung mit den restlichen Unteransprüchen.

In der Zeichnung zeigen:

Figur 1 eine Seitenansicht einer erfindungsgemäßen Kompostierungsvorrichtung, teilweise im Schnitt,

Figur 2 eine Frontansicht der Anordnung gemäß Figur 1 von der Antriebsseite aus gesehen,

Figur 3 einen Radialschnitt durch die Trommel der Anordnung gemäß Figur 1 in schematischer Darstellung,

Figur 4 eine Teilansicht eines mit einem Kettentrieb versehenen Ausführungsbeispiels,

Figur 5 eine vergrößerte Darstellung einer Halbschalenlagerung,

Figur 6 eine vergrößerte Darstellung einer Rollenlagerung und

Figur 7 eine Teilansicht eines mit einem Zahnradantrieb versehenen Ausführungsbeispiels.

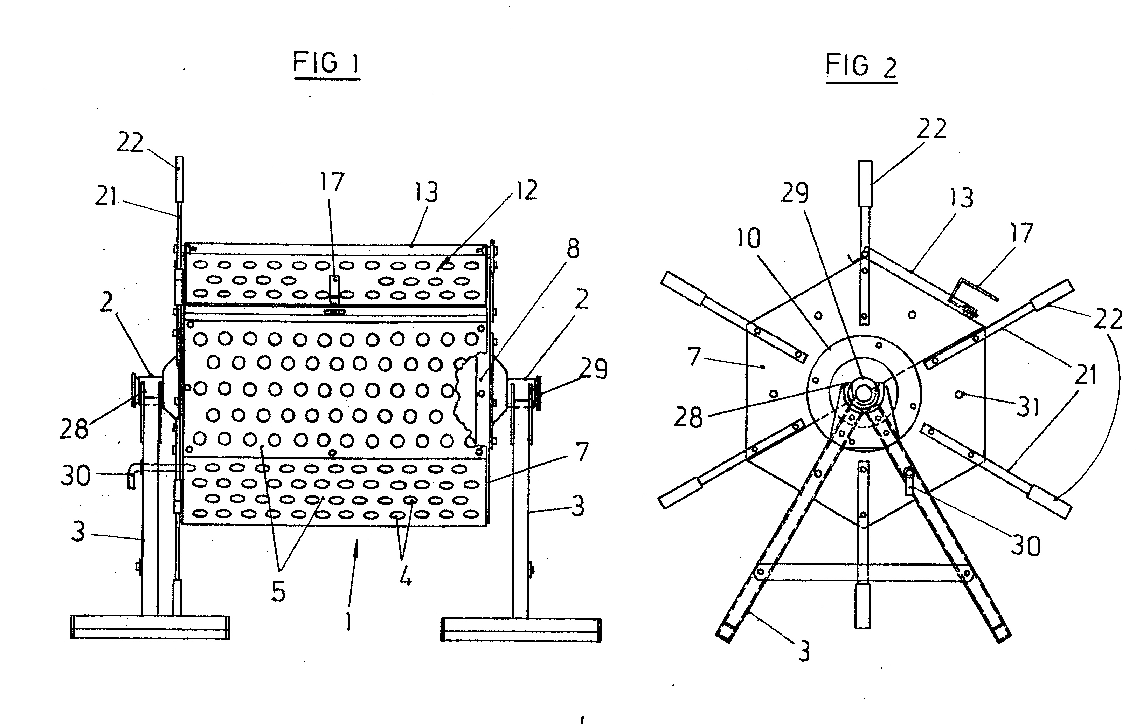

Die den Zeichnungen zugrundeliegende Kompostierungsvorrichtung besteht, wie am besten aus Figur 1 erkennbar ist, aus einer liegend, d. h. mit waagrechter Achse angeordneten Trommel 1, die über an ihren beiden Stirnseiten angeordnete Wellenstummel 2 auf seitlichen Stützböcken 3 um ihre horizontale Längsachse drehbar gelagert ist. Die Trommel 1 ist mit umfangsseitigen Ausnehmungen 4 versehen, die eine Belüftung des Trommelinhalts sowie eine Aussiebung von verrottetem Material ermögliche. Die Trommel 1 besitzt, wie insbesondere die FAiguren 2 und 3 zeigen, einen mehreckförmigen Querschnitt. Hierdurch wird ohne innere Mitnehmerleisten eine gute Durchmischung des Trommelinhalts erreicht. Der Ausführung gemäß Figuren 1 bis 3 liegt eine Trommel mit sechseckförmigem Querschnitt zugrunde, so daß sich auch eine verhältnismäßig gleichmäßige Masseverteilung zentral zur Trommelachse ergibt. Außerdem gewährleistet diese Querschnitts form auch eine Bündelung des ausgesiebten Materials.

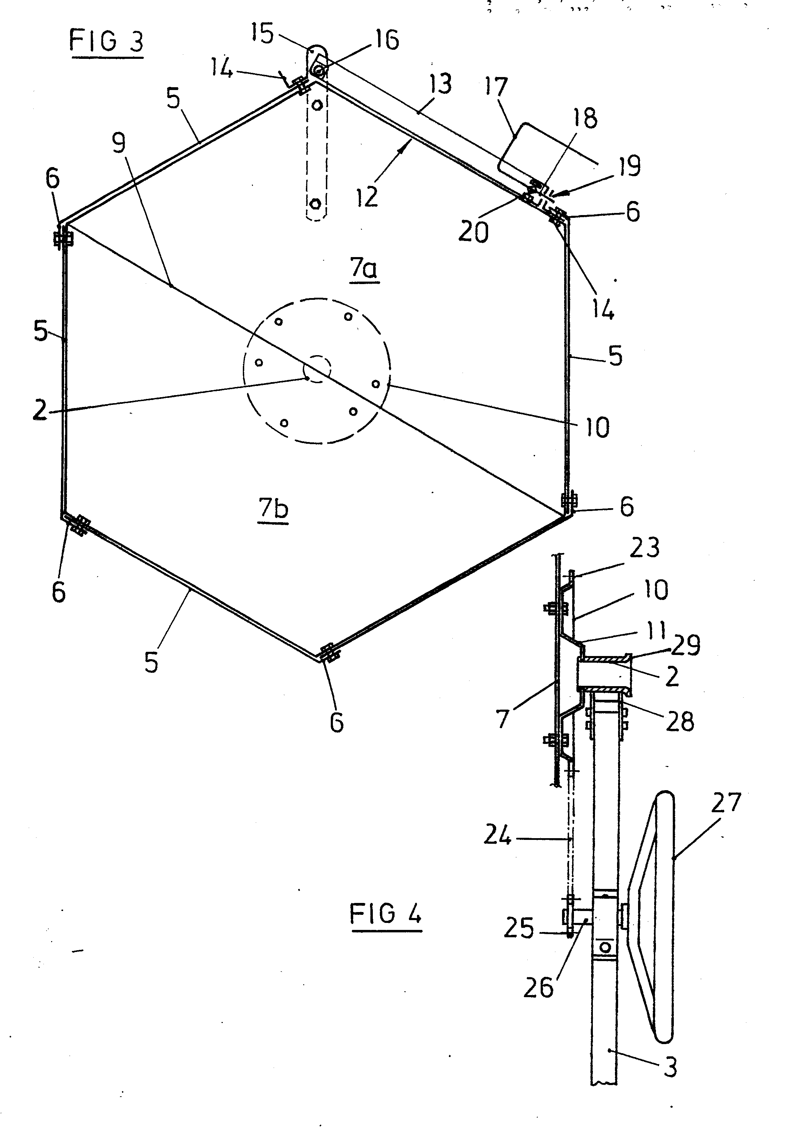

Aufgrund des Vieleckquerschnitts der Trommel 1 setzt sich ihre Außenkontur aus ebenen Umfangsabschnitten zusammen. Zur Bildung des Trommelmantels sind daher den ebenen Umfangsabschnitten zugeordnete, im Bereich der Querschnittskanten aneinander anschließende, durch die Ausnehmungen 4 in Form von ausgestanzten Löchern aufweisende Bleche gebildete Mantelabschnitte 5 vorgesehen. Diese kö n en im Bereich der Querschnittskanten stumpf aneinander angesetzt sein. Im dargestellten Ausführungsbeispiel sind die Mantelabschnitte 5, wie am besten aus Figur 3 erkennbar ist, so ausgebildet, daß sie sich im Bereich der Querschnittskanten über-bzw. unterlappen, so daß sich ein sauberer Kantenverschluß ergibt. Hierzu weisen die die Mantelabschnitte 5 bildenden Bleche jeweils eine entsprechend dem von zwei Umfangsabschnitten eingeschlossenen Winkel abgewinkelte Randleiste 6 auf, die um die zugeordnete Querschnittskante herumgreift und den bis zu dieser Kante reichenden Rand des benachbarten Mantelabschnitts 5 übergreift. Im Überlappungsbereich sind die die Mantelabschnitte 5 bildenden Bleche, wie in Figur 1 angedeutet ist, mehrfach miteinander verschraubt, so daß sich ein stabiler Verbund ergibt. Bei der der hier vorliegenden Ausführung zugrundeliegenden sechseckförmigen Querschnittskonfiguration ergeben sich in vorteilhafter Weise vergleichsweise schmale Mantelabschnitte 5, die sich somit zu einem handlichen Paket aufeinanderstapeln und verpacken lassen.

Die Stirnseiten der Trommel 1 sind durch Stirnwände 7 verschlossen. Diese sind, wie in Figur 1 angedeutet ist, im Breich ihrer radial äußeren Kanten mit einem nach innen abgebogenen, umlaufenden Flansch 8 versehen, an dem die Mantelabschnitte 5 mit ihren seitlichen Enden durch Schrauben oder Nieten etc. festlegbar sind. Zweckmäßig wird eine lösbare Festlegung vorgesehen, was die Montage und Demontage erleichtert. Dasselbe gilt auch für die Verbindung der Mantelabschnitte 5 untereinander. Die Stirnwände 7 bestehen im dargestellten Ausführungsbeispiel aus zwei entlang einer durch die Trommelachse gehenden Teilfuge 9 zusammengesetzten Hälften 7a und 7b, wie am besten aus Figur 3 erkennbar ist. Im dargestellten Ausführungsbeispiel mit einem sechseckförmigen Trommelquerschnitt besitzen die Stirnwandhälften 7a bzw. 7b die form gleichmäßiger Trapeze und lassen sich daher praktisch ohne Verschnitt von einem entsprechend breiten Band herunterschneiden. Außerdem lassen sich diese Stirnwandhälften auch einfach auf einen die Mantelabschnitte 5 enthaltenden Stapel aufstapeln. Die beiden Stirnwandhälften 7a bzw. 7b können im Bereich der Stoßfuge 9 mit aneinander anliegenden und mit-einander verschraubten Flanschen versehen sein. Ein zusätzlicher Zusammenhalt der Stirnwandhälften 7a bzw. 7b ergibt sich durch mittig auf die Stirnwände 7 aufgesetzte und hiermit verschraubte Flansche 10, welche jeweils einen seitlichen Wellenstummel 2 tragen, wie aus den Figuren 2 und 3 ersichtlich ist. Die Wellenstummel 2 können, wie Figur 4 anschaulich zeigt, einfach als Rohrstutzen ausgebildet sein, die in eine zugeordnete zentrale Ausnehmung des zugeordneten Flansches 10 eingepreßt sind. Die Flansche 10 sind im dargestellten Ausführungsbeispiel jeweils als mit einer mittigen, den zugeordneten Wellenstummeln 2 aufnehmenden Ausbuchtung 11 versehene Teller ausgebildet.

Zum Befüllen der Trommel 1 ist im Bereich eines ebenen Umfangsabschnitts eine Einfüllöffnung 12 vorgesehen, die durch eine - schwenkbar gelagerte und verriegelbare Klappe 13 verschließbar ist. Die Klappe 13 ist, wie am besten aus Figur 3 erkennbar ist, mit einer umlaufenden Randleiste versehen. Diese kann einfache als umgebogener Randflansch hergestellt sein. Der Rand der die Öffnung 12 begrenzenden Mantelabschnitte 5 ist, wie Figur 3 ferner zeigt, durch jeweils eine Versteifungsschiene 14, hier in Form einer zweischenkligen Winkelschiene, versteift. Die eine dieser Winkelschienen 14 untergreift mit einem Schenkel die um die zugeordnete, öffnungsseitige Querschnittskante herumgreifende Randleiste 6 eines an die Öffnung 12 sich anschließenden Mantelabschitts 5. Diese öffnungsseitige Randleiste 6 ist hierbei demnach ebenso wie die übrigen Randleisten 6 unterfüttert, so daß sich im Bereich dieser öffnungsseitigen Querschnittskante keine Abmessungsunterschiede gegenüber den übrigen Querschnittskanten ergeben. Die andere Versteifungsschiene 14 ist auf den öffnungsseitigen Rand des zugeordneten Mantelabschnitts 5 aufgesetzt, so daß auch dieser öffnungsseitige, im Bereich einer Querschnittskante endende Rand dieses Mantelabschnitts ebenso wie die übrigen, im Bereich einer Querschnittskante endenden Ränder der weiteren Mantelabschnitte 5 von einem zugeordneten Deckelement übergriffen wird. Zur Lagerung der Schwenkklappe 13 sind an die Stirnwände 7 angesetzte, über diese im Bereich einer Kante der Öffnung 12 vorstehende Lagerlaschen 15 vorgesehen, die jeweils einen in eine zugeordnete Ausnehmung der Klappe 13 eingreifenden Lagerstift 16 tragen.

Zur Verriegelung der Schwenkklappe 13 sind auf der der Schwenklagerung gegenüberliegenden Seite ein oder mehrere Riegel 17 vorgesehen. In der Regel genügt ein derartiger Riegel. Nur bei sehr langen Trommeln erweisen sich mehrere Riegel als zweckmäßig. Der Riegel 17 besteht hier, wie Figur 3 weiter zeigt, aus einem U-förmigen Bügel, der mit einem Schenkel schwenkbar auf der Klappe 13 gelagert ist und dessen anderer Schenkel als Handgriff dient. Die Anordnung ist dabei so gewählt, daß das vordere Ende des schwenkbar gelagerten Schenkels als Sperrelement 18 durch einen Schlitz der umlaufenden Randleiste der Klappe 13 hindurchgreift und durch Drehen des Riegels 17 in und außer Eingriff mit einem zugeordneten Schlitz 19 der benachbarten Versteifungsschiene 6 bringbar ist. Zur schwenkbaren Lagerung des Riegels 17 ist dieser auf eine an der Schwenkklappe 13 festgelegte Schraube aufgesteckt und durch eine selbstsichernde Mutter hintergriffen. zur Gewährleistung von Klapperfreiheit ist der Riegel 17 im Bereich seiner Lagerung durch zwei Federscheiben 20 in Richtung der Drehachse abgestützt.

Die Dreh-bzw. Schwenkbewegung der Trommel 1 kann von Hand bewerkstelligt werden. Hierzu sind bei der Ausführung gemäß Figuren 1 und 2 an einer Stirnwand 7 sternförmig befestigte, den Trommelmantel in radialer Richtung überragende Betätigungshebel 21 vorgesehen. Diese können als Rohr-bzw. Flachschienenabschnitte ausgebildet und im Bereich ihrer äußeren Enden mit einem aufgesteckten Handgriff 22 versehen sein. Im dargestellten Ausführungsbeispiel sind sechs den sechs Ecken der Trommel 1 zugeordnete, radial angeordnete Betätigungshebel 21 vorgesehen, so daß eine bequeme Bedienung möglich ist. Die hier zur Bildung einer Antriebseinrichtung vorgesehenen Betätigungshebel 21 stellen sicher, daß der Trommelquerschnitt von einem Kreisquerschnitt abweichen kann.

An-stelle der bei der Ausführung gemäß Figuren 1 und 2 vorgesehenen Betätigungshebel 21 könnte, sofern eine Untersetzung erwünscht ist, aber auch ein Getriebe mit einem auf eine Stirnwand 7 aufgesetzten Treibrad und einem auf einem benachbarten Stützbock 3 gelagerten Antriebsrad vorgesehen sein. Eine Anordnung dieser Art liegt der Figur 4 zugrunde. Hierbei handelt es sich um einen Kettentrieb mit einem an den aufgebogenen Rand des einen Wellenstummel 2 tragenden Flansches 10 angeformten Kettenzahnkranz 23 und einen über eine Kette 24 hiermit verbundenen Kettenritzel 25, das auf einer auf einem Stützbock 3 gelagerten Antriebswelle 26 aufgenommen ist, die mittels eines Betätigungselements 27, hier in Form eines Handrads, verdreht werden kann. Anstelle des Handrads könnte auch eine Kurbel vorgesehen sein. Die Verwendung eines Handrads mit geschlossenem Umfang ergibt jedoch eine hohe Sicherheit und eine hohe Bedienungsfreudlichkeit.

Sowohl der Kettentrieb der Anordnung gemäß Figur 4 als auch die Hebelanordnung gemäß Figuren 1 und 2 lassen im Bereich der Axiallagerung der Trommel 1 im Vergleich zu den Anforderungen bei einem Zahnradantrieb verhältnismäßig große Toleranzen zu, d. h. große Toleranzen sind hierbei völlig unschädlich. Zur Aufnahme der Wellenstummel 2 können daher einfache, nach oben offene Stützlager 28 Verwendung finden, in die der zugeordnete Wellenstummel von oben einlegbar bzw. aus denen der zugeordnete Wellenstummel nach oben aushebbar ist, wie Figur 2 erkennen läßt. Die axiale Sicherung kann dabei durch an die Wellenstummel 2 fest angeformte, radiale Bunde 29 und die diesen gegenüberliegenden Wandungsbereiche der Ausbuchtung 11 des zugehörigen Tellers 10 erfolgen. Die Stützlager 28 können als Gleitlager ausgebildet sein. Eine Ausführung dieser Art liegt den Figuren 1 bis 5 zugrunde. Hierzu sind die Lagerböcke 3 mit zwei an den oberen Enden der Stützbeine befestigten, einander gegenüberliegenden Lagerlaschen 31 versehen, die mit im Querschnitt halbschalenförmigen Ausnehmungen 32 versehen sind. Zur Vergrösserung der Auflagefläche sind die Lagerlaschen 31 im Bereich der Ausnehmung 32 mit einer jeweils nach innen umgebogenen Randleiste 33 versehen. Auf den einander gegenüberliegenden Randleisten 33 kann der jeweils zugeordnete Wellenstummel direkt aufliegen. Im dargestellten Ausführungsbeispiel sind zur Erzielung besonders guter Laufeigenschaften die einander gegenüberliegenden Randleisten 33 mit nach außen umgebogenen Randleisten 34 übergreifende Halbschalen 35 vorgesehen. Diese können zweckmäßig aus Kunststoff bestehen, der gute Selbstschmierungseigenschaften besitzt.

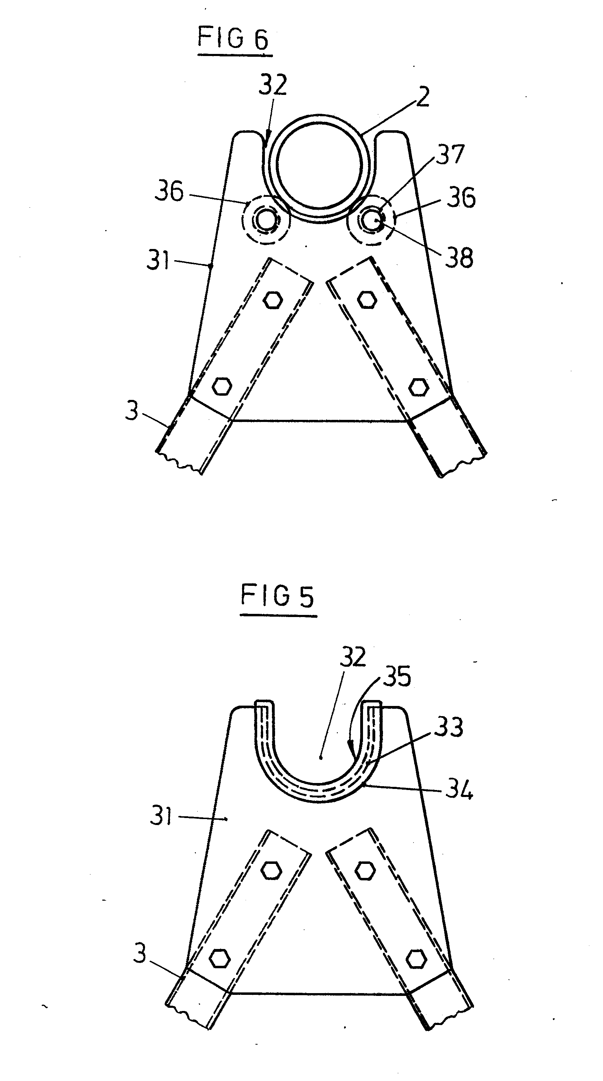

Anstelle der in Figur 5 dargestellten Gleitlagerung kann auch eine Rollenlagerung vorgesehen sein. Eine Ausführung dieser Art, die insbesondere für Anordnungen mit großer Trommelbaugröße in Frage kommt, liegt der Figur 6 zugrunde. Auch bei dieser Ausführung sind die Stützböcke 3 mit jeweils zwei am oberen Ende der Stützbeine befestigten, einander gegenüberliegenden Lagerlaschen 31 versehen, die mit im Querschnitt halbschalenförmigen Ausnehmungen 32 versehen sind. Im Bereich zwischen den einander gegenüberliegenden Lagerlaschen 31 sind hier zwei um weniger als dem Wellenstummeldurchmesser umfangsmäßig voneinander distanzierte, auf etwa gleicher Höhe angeordnete Rollen 36 vorgesehen, deren Umfang über die Kontur der laschenseitigen Ausnehmung 35 vorsteht, so daß der in die Ausnehmung 35 eingelegte Wellenstummel 2 auf den Rollen 36 aufliegt. Die Rollen 36 sind auf die einander gegenüberliegenden Lagerlaschen 31 überbrückenden Achsen 37 gelagert. Die Rollen 36 bestehen zweckmäßig aus Sintermetall, das gute Selbstschmierungseigenschaften aufweist.

Die Lagerlaschen 32 sind bei den Ausführungen gemäß Figur 5 und 6 auf das obere Ende der in gegenseitiger Spreizstellung angeordneten Stützbeine der Lagerböcke 3 aufgeschraubt, wodurch sich eine zuverlässige gegenseitige Verbindung der Stützbeine ergibt. Die den Rollen 36 zugeordneten Achsen 37 können dabei einfach als mit seitlichen Zapfen 38 in entsprechende Bohrungen der Lagerlaschen 21 eingreifende Einlegteile ausgebildet sein.

Zur Sicherung der Trommel 1 gegen ungewollte Drehbewegungen kann ein mit einer der Stirnwandungen 7 in Eingriff bringbarer, auf einem der Stützböcke 3 angeordneter Sperrstift 30 vorgesehen sein. Die betreffende Stirnwand 7 ist hierzu, wie Figur 2 zeigt, mit mehreren, auf einem Teilkreis angeordneten Rastlöchern 31 versehen.

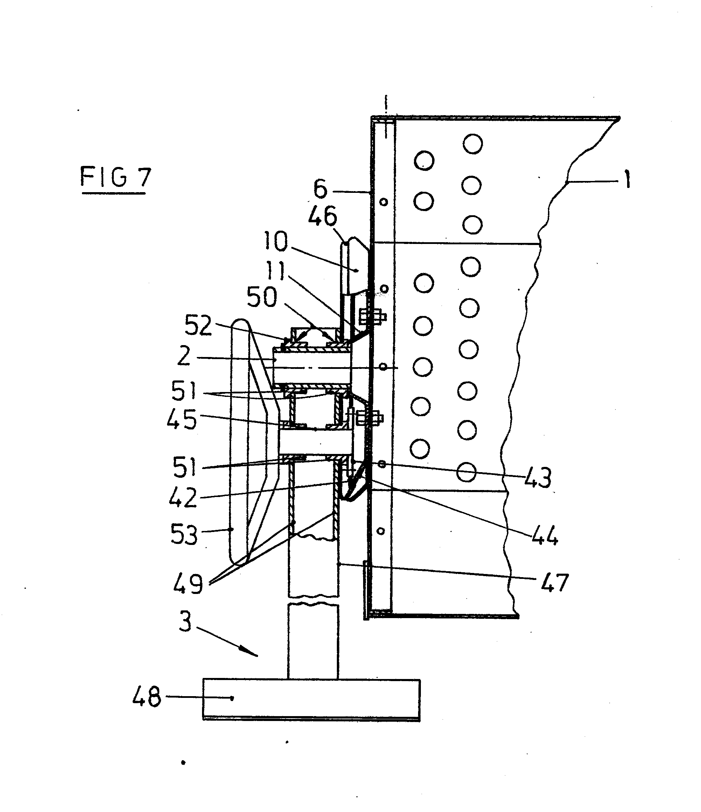

In Figur 7 ist zum Antrieb der Trommel 1 ein Stirnradgetriebe vorgesehen. Hierzu ist im Bereich einer Stirnseite der Trommel 1 ein Treibkranz 42 in Form eines Zahnkranzes vorgesehen, der mit einem Antriebsrad 43 in Form eines Ritzels im Eingriff ist. Der Zahnkranz 42 ist als Stanzformling ausgebildet und auf den antriebsseitigen Teller 10 aufgesetzt. Hierdurch ist es möglich, zur Bildung des Zahnkranzes ein vergleichsweise dickes, eine ausreichende Zahnbreite ergebendes Material zu verwenden. Der Teller 10 besitzt zur Aufnahme des Treibkranzes 42 einen aufgebogenen Rand 44, so daß genügend Bewegungsspielraum zwischen der Trommelstirnseite bzw. der Tellerverschraubung und dem mit dem Treibkranz 42 im Eingriff stehenden Antriebsrad 43 besteht. Das Antriebsrad 43 ist auf einer zugeordneten Antriebswelle 45 aufgenommen, die ebenso wie der benachbarte Wellenstummel 2 in paralleler Ausrichtung hierzu auf dem antriebsseitigen Stützbock 3 gelagert ist. Im dargestellten Ausführungsbeispiel ist der Treibkranz 42 als innenverzahnter Zahnkranz ausgebildet, der das Antriebsrad 43 umfaßt, was eine kompakte Bauweise und einen geringen Achsabstand zwischen Wellenstummel 2 und Antriebswelle 45 ergibt, was sich vorteilhaft auf die Genauigkeit auswirkt. Der äußere Rand des Tellers 10 ist zur Erzielung einer hohen Steifigkeit nach rückwärts umgebogen und stützt sich auf der zugeordneten Trommelstirnwand 6 ab. Sofern eine Bremseinrichtung erforderlich bzw. erwünscht ist, kann der Außenumfang des Tellers 10 als Bremstrommel Verwendung finden. Zur Kapselung des Zahnradgetriebes ist ein auf den Teller 10 aufgesetzter, den Treibkranz 42 übergreifender Deckel 46 vorgesehen.

Der hier vorgesehene Zahnradantrieb der Trommel 1 erfordert eine exakte gegenseitige Lagerung der den Treibkranz 12 tragenden Trommel 1 und der das Antriebsrad 43 tragenden Antriebswelle 45. Um dies zu gewährleisten, sind die Antriebswelle 45 und der benachbarte Wellenstummel 2 auf einem etwa lotrecht angeordneten Holm 47 aufgenommen, der mit seinem unteren Ende zur Bildung des Stützbocks 3 an einem etwa waagrechten Standfuß 48 begestigt ist. Der lotrechte Holm 47 ist als Abschnitt eines Vierkantprofilrohrs ausgebildet, der zur Aufnahme der Antriebswelle 45 und des Wellenstrummels 2 mit seine zur Trommelstirnwand 6 parallele Seitenwandungen 49 durchsetzenden, mit dem gewünschten Achsabstand zwischen Wellenstummel 2 und Antriebwelle 45 übereinand angeordneten Durchgangslöchern 50 versehen ist. Diese sind als Stanzlöcher ausgebildet, was eine einfache und dennoch genaue Herstellung, d. h. einen genauen Achsabstand und eine genaue Parallelfluchtung, ergibt, wobei sich der geringe Achsabstand zudem vorteilhaft auf die erzielbare Genauigkeit auswirkt. In die Durchgangslöcher 50 sind die Antriebswelle 45 bzw. den Wellenstummel 2 aufnehmende Lagerbüchsen 51 eingesetzt. Der waagrechte Standfuß 48 kann einfach als am unteren Ende des lotrechten Holms 47 angeordneter Querholm ausgebildet sein, so daß sich eine etwa T-förmige Stützbockausführung ergibt. Im dargestellten Ausführungsbeispiel besitzt der Standfuß 48 eine doppel-T-förmige Konfiguration. Der lotrechte Holm 47 ist hierbei am mittleren Quersteg des Standfußes 48 befestigt.

## Ansprüche

1. Vorrichtung zur Kompostierung organischer Abfälle mit einer um ihre Längsachse drehbaren, mittels mindestens einer im Bereich einer stirnseitig angeordneten Antriebseinrichtung bewegbaren Trommel (1), die vorzugsweise mit stirnseitig angeordneten Wellenstummeln (2) auf seitlichen Stützböcken (3) gelagert ist, dadurch gekennzeichnet, daß die Trommel (1) einen Vieleckquerschnitt aufweist und daß die trommelseitigen Elemente (21 bzw. 23) der Antriebseinrichtung außerhalb des Trommelumfangs angeordnet sind.

2. Vorrichtung nach Anspruch 1, dadurch gekennzeichnet, daß der Mantel der Trommel (1), deren Querschnitt vorzugsweise die Form eines gleichmäßigen Sechsecks hat, jeweils einem ebenen Umfangsabschnitt zugeorneten Mantelabschnitten (5) zusammengesetzt ist, die vorzugsweise jeweils eine abgewinkelte Randleiste (6) aufweisen, welche den Rand des jeweils benachbarten Mantelabschnitts (5) übergreift und die mit ihren seitlichen Enden auf jeweils zugeordneten Flanschen (8) der die Trommelstirnseiten verschließenden Stirnwände (7) aufliegen, die vorzugsweise mit einer durch die Trommelachse gehenden Teilfuge (9) versehen sind.

3. Vorrichtung nach Anspruch 1, dadurch gekennzeichnet, daß die Wellenstummel (2), die vorzugsweise jeweils auf einem zugeordneten, auf eine Stirnwand (7) aufgesetzten Flansch (10) aufgenommen sind, als Rohrstutzen ausgebildet und in eine zentrale Ausnehmung einer mittigen Ausbuchtung (11) des zugeordneten Flansches (10) eingepreßt sind.

4. Vorrichtung nach Anspruch 1, dadurch gekennzeichnet, daß im Bereich eines ebenen Umfangsabschnitts der Trommel (1) eine durch die Längskante der benachbarten Mantelabschnitte (5) unter-bzw. übergreifende Versteifungsschienen (14) begrenzte Öffnung (12) vorgesehen ist, die durch eine schwenkbar gelagerte Klappe (13) verschließbar ist, die an auf die Stirnwandungen (7) aufgesetzten Lagerlaschen (15) schwenkbar gelagert und in der Schließstellung durch mindestens einen Riegel (17) verriegelbar ist, der auf der Schwenkklappe (13) gelagert ist, und dem ein Schlitz (19) in der benachbarten Versteifungsschiene (14) zugeordnet ist.

5. Vorrichtung nach Anspruch 1, dadurch gekennzeichnet, daß die Antriebseinrichtung aus an mindestens einer Stirnwand (7) sternförmig befestigten, den Trommelmantel in radialer Richtung überragenden, mit jeweils einem Handgriff (22) versehenen Betätigungshebeln (21) besteht, die vorzugsweise im Bereich der Querschnittskanten der Trommel (1) angeordnet sind.

6. Vorrichtung nach Anspruch 1, dadurch gekennzeichnet, daß die Antriebseinrichtung als Kettentrieb ausgebildet ist, der einen an den aufgebogenen äußeren Rand des an eine Stirnwand (7) angeflanschten, einen Wellenstummel (2) tragenden Flansches (10) angeformten Kettenzahnkranz (23) und ein durch eine Kette (24) hiermit verbundenes, auf dem zugeordneten Stützbock (3) gelagertes, mittels eines Betätigungselements (27) antreibbares Kettenritzel (25) aufweist.

7. Vorrichtung nach Anspruch 1, dadurch gekennzeichnet, daß die den Wellenstummeln (2) zugeordneten Lager als auf den Stützböcken (3) angeordnete, nach oben offene Stützlager (28) ausgebildet sind, in die die Wellenstummel (2), die an ihrem vom Flansch (10) jeweils abgewandten Ende einen vorzugsweise durch eine radiale Aufweitung gebildeten Bund aufweisen, eingelegt sind.

8. Vorrichtung nach Anspruch 7, dadurch gekennzeichnet, daß die Stützlager (28) als Halbschalenlager ausgebildet sind, wobei die Stützböcke (3) mit jeweils bei an ihren Stützbeinen befestigten, einander gegenüberliegenden Lagerlaschen (31) versehen sind, die mit im Querschnitt halbschalenförmigen Ausnehmungen (32) und mit im Bereich der Ausnehmungen (32) nach innen umgebogenen Randleisten (33) versehen sind, wobei in die Ausnehmungen (32) einander benachbarter Lagerlaschen (31) eine diese überbrückende, aus Kunststoff bestehende Halbschale (35) eingelegt ist, die im Bereich ihrer Stirnseiten nach radial außen weisende Bunde (34) aufweist.

9. Vorrichtung nach Anspruch 7, dadurch gekennzeichnet, daß die Stützlager als Rollenlager mit zwei auf etwa gleicher Höhe angeordnete, voneinander beabstandeten, drehbar gelagerten Rollen (36) ausgebildet sind, wobei die Stützböcke (3) mit jeweils zwei an ihren Stützbeinen befestigten, einander gegenüberliegenden Lagerlaschen (31) versehen sind, die mit im Querschnitt halbschalenförmigen Ausnehmungen (32) versehen sind, deren Kontur von den Rollen (36) übergriffen wird, die auf die Lagerlaschen (31) überbrückenden Achsen (37) gelagert sind, die mit seitlichen Zapfen (38) in zugeordnete Ausnehmungen der Lagerlaschen (31) eingelegt sind.

10. Vorrichtung nach Anspruch 1, dadurch gekennzeichnet, daß die mit stirnseitig angeordneten Wellenstummeln (2) auf seitlichen Stützböcken (3) gelagerte Trommel (1) mit mindestens einem stirnseitig angeordneten Treibkranz (42) versehen ist, der im Eingriff mit einem auf einer auf dem benachbarten Stützbock (3) gelagerten Antriebswelle (45) aufgenommenen Antriebsrad (43) ist, wobei zumindest jeder eine Antriebswelle (45) aufnehmende Stützbock (3) einen als Profilrohr ausgebildeten Holm (47) aufweist, der im Bereich seiner trommelstirnseitenparallelen Seitenwandungen (49) mit zwei in Richtung einer Trommelradialen gegeneinander versetzten trommelachsparallelen Lochungen (50) versehen ist, in welche die Antriebswelle (45) bzw. den dieser benachbarten Wellenstummel (2) der Trommel (1) aufnehmende Lagerbüchsen (51) eingesetzt sind.

FIG 2

FIG 1

0 210 382

FIG 3

15 16
14
5
9
13 17
18
6
12 19
6
14
20
7a
5 5
6
2
10
7b
6
5
6

23
10
11 29
2
7 28
24
25
26
FIG 4
27
3

## FIG 6

## FIG 5

FIG 7

Europäisches
Patentamt

**EUROPÄISCHER RECHERCHENBERICHT**

Nummer der Anmeldung

EP 86 10 7674

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 890 129 (CHESTER) <br> * Insgesamt * <br><br> --- | 1,3 | C 05 F 9/02 |
| X | US-A-3 966 415 (CHESTER) <br> * Insgesamt * <br><br> --- | 1,3 | |
| X | US-A-3 837 810 (RICHARDS) <br> * Insgesamt * <br><br> --- | 1,6 | |
| P,X | DE-U-8 519 323 (LESCHA MASCHINENFABRIK) <br> * Insgesamt * <br><br> --- | 1-10 | |
| P,X | DE-U-8 519 324 (LESCHA MASCHINENFABRIK) <br> * Insgesamt * <br><br> --- | 1-10 | |
| P,X | DE-U-8 519 325 (LESCHA MASCHINENFABRIK) <br> * Insgesamt * <br><br> --- | 1-10 | RECHERCHIERTE SACHGEBIETE (Int. Cl.4) <br><br> C 05 F 9/00 |
| P,X | DE-U-8 519 326 (LESCHA MASCHINENFABRIK) <br> * Insgesamt * <br><br> ----- | 1-10 | |

Der vorliegende Recherchenbericht wurde für alle Patentansprüche erstellt.

| Recherchenort <br> DEN HAAG | Abschlußdatum der Recherche <br> 28-10-1986 | Prüfer <br> VAN DEN BOSSCHE W.L. |
|---|---|---|